# EUROPÄISCHE PATENTSCHRIFT

(11) **EP 1 384 754 B1**
(45) Veröffentlichungstag und Bekanntmachung des Hinweises auf die Patenterteilung: **21.04.2004**
(21) Anmeldenummer: 03015548.5
(22) Anmeldetag: 10.07.2003
(51) Int. Cl.: C08L 43/04, C09D 143/04, C08L 29/04, C09D 129/04, D21H 19/20

(54) **Silan-modifizierte Polyvinylalkohol-Mischungen**
Mixtures of silane-modified polyvinylalcohols
Mélanges d' alcools polyviniliques modifiés au silane

(30) Priorität: 18.07.2002 DE 10232665
(43) Veröffentlichungstag der Anmeldung: 28.01.2004
(73) Patentinhaber: Wacker Polymer Systems GmbH & Co. KG, 84489 Burghausen (DE)
(72) Erfinder: Bacher, Andreas, Dr., 84489 Burghausen (DE); Fickert, Karl-Ernst, 84503 Altötting (DE); Mayer, Theo, Dr., 84387 Julbach (DE)
(74) Vertreter: Schuderer, Michael, Dr.

(56) Entgegenhaltungen:
- EP-A- 1 127 706
- PATENT ABSTRACTS OF JAPAN vol. 017, no. 327 (C-1073), 22. Juni 1993 (1993-06-22) & JP 05 032931 A (KURARAY CO LTD), 9. Februar 1993 (1993-02-09)

## Beschreibung

Die Erfindung betrifft Silan-modifizierte Polyvinylalkohol-Mischungen sowie deren Verwendung in Papierstreichmassen.

Polyvinylalkohole werden in Papierstreichmassen als Cobinder eingesetzt um den Glanz und den Weißgrad der Papierbeschichtung zu verbessern. Die Papierstriche, insbesondere für Inkjet-Papiere, sind einer hohen mechanischen Belastung ausgesetzt. Es wird daher gefordert, dass sich die Beschichtungen durch hohe Abriebfestigkeit auszeichnen. Zudem muß die Formulierung eine gute Tintenabsorption gewährleisten, ohne dass der Tintentropfen verläuft.

Die EP-A 76940 beschreibt Silicium-haltige Polyvinylalkohole, welche zur Papierbeschichtung verwendet werden. Der Siliciumanteil wird dabei entweder durch nachträgliche Silylierung von Polyvinylalkohol eingebracht, oder mittels Copolymerisation von ethylenisch ungesättigten, Silan-haltigen Comonomeren mit Vinylmonomeren und daran anschließender Verseifung der Vinylester-Einheiten.

Aus der EP-A 1127706 sind Papierbeschichtungen bekannt, welche sich durch hohe Wasserfestigkeit, Licht- und Temperaturbeständigkeit auszeichnen und daher für den Einsatz im Außenbereich prädestiniert sind. Dieses Eigenschaftsprofil wird mit einer Kombination aus Pigment, Silanol-modifiziertem Polyvinylalkohol und einem filmbildenden Polymer mit einer Tg < 50°C erhalten.

Wärmeempfindliche Aufzeichnungspapiere mit einer Beschichtung, welche Siliciumverbindungen enthält, sind aus der DE-C 3519575 bekannt. Bei den Siliciumverbindungen kann es sich um Silicium-modifizierten Polyvinylalkohol in Kombination mit kolloidaler Kieselsäure und/oder amorpher Kieselsäure handeln.

Die EP-A 1080940 betrifft eine Beschichtungsmittel-Zusammensetzung zur Herstellung von wärmeempfindlichen Aufzeichnungsmaterialien oder Inkjet-Papiere, welche als eine Komponente E-thylen-Vinylalkohol-Copolymerisate oder Silicium-modifizierte Vinylalkoholpolymere oder Silicium-modifizierte Ethylen-Vinylalkoholpolymere, sowie als weitere Komponente eine Organotitan-Verbindung enthält.

Der Erfindung lag die Aufgabe zugrunde, ein Bindemittel auf Basis von Polyvinylalkohol für Papierstreichmassen zu entwickeln, welches zu hoher Abriebfestigkeit im Papierstrich führt, und in wässriger Lösung auch in höheren Konzentrationen einsetzbar ist. Zudem sollten damit Papierstrichformulierungen herstellbar sein, welche bei hohem Festgehalt der Streichmasse im Hochscherbereich strukturviskoses Verhalten sicherstellen.

Gegenstand der Erfindung sind Silan-modifizierte Polyvinylalkohol-Mischungen mit
a) einem niedermolekularen, Silan-haltigen Polyvinylalkohol mit einer Höppler-Viskosität (nach DIN 53015 als 4 Gew.-%-ige wässrige Lösung) von 1 bis 25 mPas, und
b) einem höhermolekularen, Silan-haltigen Polyvinylalkohol mit einer Höppler-Viskosität (nach DIN 53015 als 4 Gew.-%-ige wässrige Lösung) von 10 bis 50 mPas, wobei
der Silan-haltige Polyvinylalkohol a) eine geringere Höppler-Viskosität aufweist, als der Silan-haltige Polyvinylalkohol b).

Geeignete Silan-modifizierte Polyvinylalkohole sind vollverseifte oder teilverseifte Vinylester-Polymerisate mit einem Hydrolysegrad von 75 bis 100 Mol-% und einem Anteil an Silan-haltigen Comonomereinheiten von 0.01 bis 10 Mol-%. Die vollverseiften Vinylester-Polymerisate haben einen Hydrolysegrad von vorzugsweise 97.5 bis 100 Mol-%, besonders bevorzugt 98 bis 99.5 Mol-%. Die teilverseiften Polyvinylester haben einen Hydrolysegrad von vorzugsweise 80 bis 95 Mol-%, besonders bevorzugt 86 bis 90 Mol-%. Die Höppler-Viskosität dient als Maß für das Molekulargewicht und für den Polymerisationsgrad der teil- oder vollverseiften, silanisierten Vinylesterpolymerisate.

Die teil- oder vollverseiften, silanisierten Vinylesterpolymerisate werden zugänglich mittels radikalischer Polymerisation von einem oder mehreren Vinylestern von unverzweigten oder verzweigten Alkylcarbonsäuren mit 1 bis 18 C-Atomen in Gegenwart von ethylenisch ungesättigten, silanhaltigen Comonomeren, und anschließender Verseifung der damit erhaltenen Silan-haltigen Vinylesterpolymerisate.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 15 C-Atomen, beispielsweise VeoVa9^{R} oder VeoVa10^{R} (Handelsnamen der Firma Resolution). Besonders bevorzugt ist Vinylacetat.

Neben den Vinylester-Einheiten können gegebenenfalls noch ein oder mehreren Monomere aus der Gruppe umfassend Methacrylsäureester und Acrylsäureester von Alkoholen mit 1 bis 15 C-Atomen, Olefine, Diene, Vinylaromaten und Vinylhalogenide copolymerisiert sein. Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Geeignete Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird so bemessen, dass der Anteil an Vinylestermonomer > 50 Mol-% im Vinylester-Polymerisat beträgt.

Gegebenenfalls können noch weitere Comonomere in einem Anteil von vorzugsweise 0.1 bis 25 Mol-% enthalten sein. Beispiele hierfür sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und - nitrile, vorzugsweise N-Vinylformamid, Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Geeignete ethylenisch ungesättigte, silanhaltige Monomere sind beispielsweise ethylenisch ungesättigte Siliciumverbindungen der allgemeinen Formel R²SiR³₀₋₂(OR⁴)₁₋₃, wobei R² die Bedeutung CH₂=CR⁵-(CH₂)₀₋₃ oder CH₂=CR⁵CO₂(CH₂)₁₋₃ hat, R³ die Bedeutung C₁bis C₃-Alkylrest, C₁- bis C₃-Alkoxyrest oder Halogen, vorzugsweise Cl oder Br hat, R⁴ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R⁴ gegebenenfalls durch eine Ethergruppe unterbrochen sein kann, und R⁵ für H oder CH₃ steht.

Bevorzugte ethylenisch ungesättigte, silanhaltige Monomere sind γ-Acryl- bzw. γ-Methacryloxypropyltri(alkoxy)silane, α-Methacryloxymethyltri(alkoxy)silane, γ-Methacryloxypropylmethyldi(alkoxy)silane, Vinylsilane wie Vinylalkyldi(alkoxy)-silane und Vinyltri(alkoxy)silane, wobei als Alkoxygruppen beispielsweise Methoxy-, Ethoxy-, Methoxyethylen-, Ethoxyethylen-, Methoxypropylenglykolether- bzw. Ethoxypropylenglykolether-Reste eingesetzt werden können. Beispiele für bevorzugte silanhaltige Monomere sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane.

Als Silane werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Geeignete ethylenisch ungesättigte, silanhaltige Monomere sind auch Silan-Gruppen enthaltene (Meth)acrylamide, der allgemeinen Formel CH₂= CR⁶-CO-NR⁷-R⁸-SiR⁹ₘ-(R¹⁰)₃₋ₘ , wobei m= 0 bis 2, R⁶ entweder H oder eine Methyl-Gruppe ist, R⁷ H oder eine Alkyl-Gruppe mit 1 bis 5 C-Atomen ist; R⁸ eine Alkylen-Gruppe mit 1 bis 5 C-Atomen oder eine bivalente organische Gruppe in welcher die Kohlenstoffkette durch ein O- oder N-Atom unterbrochen wird, ist, R⁹ eine Alkyl-Gruppe mit 1 bis 5 C-Atomen ist, R¹⁰ eine Alkoxy-Gruppe mit 1 bis 40 C-Atomen ist, welche mit weiteren Heterocyclen substituiert sein können. In Monomeren, in denen 2 oder mehrere R⁶ oder R¹⁰- Gruppen vorkommen, können diese identisch oder unterschiedlich sein. Die (Meth)acrylamido-alkylsilane werden auch vorzugsweise in einer Menge von 0.01 bis 10.0 Gew.-%, besonders bevorzugt 0.01 bis 1.0 Gew.-%, jeweils bezogen auf das Gesamtgewicht der Comonomeren, copolymerisiert.

Beispiele für solche (Meth)acrylamido-alkylsilane sind:
3-(Meth)acrylamido-propyltrimethoxysilane, 3-(Meth)acrylamidopropyltriethoxysilane, 3-(Meth)acrylamido-propyltri(β-methoxyethoxy)silane, 2-(Meth)acrylamido-2-methylpropyltrimethoxysilane, 2-(Meth)acrylamido-2-methylethyltrimethoxysilane, N-(2-(Meth)acrylamido-ethyl)aminopropyltrimethoxysilane, 3-(Meth)acrylamido-propyltriacetoxysilane, 2-(Meth)acrylamidoethyltrimethoxysilane, 1-(Meth)acrylamido-methyltrimethoxysilane, 3-(Meth)acrylamido-propylmethyldimethoxysilane, 3-(Meth)acrylamido-propyldimethylmethoxysilane, 3-(N-Methyl-(Meth)acrylamido)-propyltrimethoxysilane, 3-((Meth)acrylamidomethoxy)-3-hydroxypropyltrimethoxysilane, 3-((Meth)acrylamidomethoxy)-propyltrimethoxysilane, N,N-Dimethyl-N-trimethoxysilylpropyl-3-(Meth)acrylamido-propylammoniumchlorid und N,N-Dimethyl-N-trimethoxysilylpropyl-2-(Meth)acrylamido-2-methylpropylammonium chlorid.

Die Vinylester-Polymerisate können in bekannter Weise mittels Polymerisation hergestellt werden; vorzugsweise durch Substanzpolymerisation, Suspensionspolymerisation oder durch Polymerisation in organischen Lösungsmitteln, besonders bevorzugt in alkoholischer Lösung. Geeignete Lösungsmittel sind beispielsweise Methanol, Ethanol, Propanol, Isopropanol. Die Polymerisation wird unter Rückfluß bei einer Temperatur von 55°C bis 100°C durchgeführt und durch Zugabe gängiger Initiatoren radikalisch initiiert. Beispiele für gängige Initiatoren sind Percarbonate wie Cyclohexylperoxi-dicarbonat oder Perester wie t-Butylperneodecanoat oder t-Butylperpivalat.

Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Die Einstellung des Molekulargewichts der beiden Komponenten der Silan-modifizierten Polyvinylalkohol-Mischungen kann in dem Fachmann bekannter Weise durch Polymerisation in Gegenwart von Molekulargewichtsreglern erfolgen. Geeignete Regler sind beispielsweise Alkohole wie Ethanol oder Isopropanol, Aldehyde wie Acetaldehyd oder Propionaldehyd, silanhaltige Regler wie Mercaptosilane, beispielsweise 3-Mercaptopropyltrimethoxysilan.

Die Verseifung der Vinylester-Polymerisate erfolgt in an sich bekannter Weise, zum Beispiel nach dem Band- oder Kneterverfahren oder im Rührkessel, im Alkalischen oder Sauren unter Zugabe von Säure oder Base. Vorzugsweise wird das Vinylester-Festharz in Alkohol, beispielweise Methanol, unter Einstellen eines Feststoffgehalts von 15 bis 70 Gew.-% aufgenommen. Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 30°C bis 70°C durchgeführt. Nach Abschluß der Hydrolyse wird das Lösungsmittel abdestilliert und der Polyvinylalkohol wird als Pulver erhalten. Der Polyvinylalkohol kann aber auch durch eine sukzessive Zugabe von Wasser, während das Lösungsmittel abdestilliert wird, als wässrige Lösung gewonnen werden.

Die Silan-modifizierten Polyvinylalkohol-Mischungen werden durch Vermischen der wässrigen Lösungen der Komponenten a) und b) hergestellt. Das Gewichtsverhältnis von niedermolekularem, Silan-haltigem Polyvinylalkohol a) zu dem höhermolekularen, Silan-haltigen Polyvinylalkohol b) kann zwischen 1 : 99 bis 99 : 1 liegen. Bevorzugt von 30 : 80 bis 90 : 10, besonders bevorzugt von 50 : 50 bis 85 : 15.

Die Silan-modifizierten Polyvinylalkohol-Mischungen eignen sich, gegebenenfalls in Verbindung mit weiteren Bindemitteln und Additiven zur Formulierung von Papierstreichmassen. Die Rezepturen für Papierstreichmassen sind dem Fachmann bekannt. Im allgemeinen werden 10 bis 50 Gew.-% der Silan-modifizierten Polyvinylalkohol-Mischung (fest), bezogen auf den Gesamtfeststoffgehalt der Rezeptur eingesetzt. Die Silan-haltigen Polyvinylalkohole können als alleinige Bindemittel eingesetzt werden, oder als Cobinder mit weiteren Bindemitteln wie Polyvinylalkohol, Stärke, Polymerdispersionen wie Styrol-Butadien-Latices, Polyacrylat-Emulsionen. Weitere Zusatzstoffe sind Pigmente und Füllstoffe wie Kieselsäure und Titanoxid, sowie Entschäumer und Dispergierhilfsmittel.

Mit den Silan-modifizierten Polyvinylalkohol-Mischungen werden Papierstreichmassen erhalten, welche sich durch hervorragende Abriebfestigkeiten auszeichnen. Weiter können mit diesen Mischungen Lösungen mit einer sehr hohen Polyvinylalkohol-Konzentration von bis zu 15 Gew.-% hergestellt werden. Zudem verhalten sich die damit erhaltenen Streichmassen strukturviskos im Hochscherbereich (γ > 10⁴ s⁻¹) bei hohem Festgehalt der Streichmasse und bieten somit einen erheblichen Vorteil im Applizieren von Streichmassen mit hohem Festgehalt.

### Beispiele:

### Herstellen eines höhermolekularen Polyvinylalkohol-Mischpolymerisats:

In einer thermostatisierten Laborapperatur mit 2.5 Liter Füllvolumen wurden unter Stickstoff 612 g Wasser, 61.2 mg Kupfer(II)-Acetat und 61.2 g einer 5 %-igen Polyvinylpyrrolidon-Lösung (PVP-K90) in Wasser vorgelegt. Unter Rühren wurden eine Lösung von 620 mg t-Butyl-per-2-ethyl-hexanoat (TBPEH 99 %-ig in Wasser), 322 mg t-Butyl-per-neodecanoat (Pergan PND 95 %-ig in Wasser) 4.9 g Vinyltriethoxysilan, 48.9 g Isopropenylacetat und 42.8 g Isopropanol in 612 g Vinylacetat zulaufen gelassen. Der Reaktor wurde auf 51.5°C aufgeheizt, nach Abflauen der Reaktion wurde stufenweise auf 75°C aufgeheizt. Es wurde noch 2 Stunden bei dieser Temperatur gehalten, dann abgekühlt. Die entstandenen Polymer-Perlen wurden abgesaugt, gut mit Wasser gewaschen und getrocknet.
In einem Laborreaktor mit 2.5 Liter Inhalt wurden 90 g Polymer-Perlen in 810 g Methanol bei 50°C gelöst. Die Lösung wurde auf 30°C abgekühlt, bei stehendem Rührer mit 500 g Methanol überschichtet und sofort mit methanolischer NaOH versetzt (10 g NaOH 46 %-ig in Wasser gelöst in 90 g Methanol) und der Rührer eingeschaltet.
Die Lösung wurde zunehmend trüber. Während der Gelphase wurde der Rührer auf höhere Drehzahl gestellt, um das Gel zu zerkleinern. Nach der Gelphase wurde noch 2 Stunden weiter reagieren gelassen, mit Essigsäure neutralisiert und der gebildete Feststoff abfiltriert, gewaschen und getrocknet. Es wurde ein vollverseifter Polyvinylalkohol erhalten, mit einer Höppler-Viskosität von 28 mPas (4 %-ig in Wasser).

### Herstellen eines niedermolekularen Polyvinylalkohol-Mischpolymerisats:

In einer thermostatisierten Laborapperatur mit 2.5 Liter Füllvolumen wurden unter Stickstoff 375.5 g Methanol, 2.47 g Vinyltriethoxysilan, 24.7 g Isopropenylacetat und 309.1 g Vinylacetat vorgelegt. Unter Rühren wurden 785 mg t-Butyl-per-pivalat zugegeben und der Ansatz auf 60°C aufgeheizt und während der Reaktion auf 60°C gehalten. 15 min nach Reaktionsbeginn wurden weitere 1.34 g t-Butyl-per-pivalat zugegeben. Nach weiteren 30 min wurde eine Mischung aus 7.2 g Vinyltriethoxysilan, 72 g Isopropenylacetat und 900 g Vinylacetat über einen Zeitraum von 165 min mit einer Rate von 383.7 ml/h zudosiert. Gleichzeitig werden weitere 785 mg t-Butyl-per-pivalat zugegeben. 75 min und 105 min nach Reaktionsbeginn wurden je 448 mg, nach 135 min 224 mg und nach 165 min, 195 min bzw. 230 min nach Reaktionsstart je 113 mg t-Butyl-per-pivalat zugegeben. 270 min Nach Reaktionsbeginn wurden dem Ansatz 312 g Methanol zugefügt. Nach einer Reaktionsdauer von 420 min wurde der Ansatz abgekühlt und verseift.
In einem Laborreaktor mit 2.5 Liter Inhalt wurden 265 g der methanolischen Polyvinylalkohol-Lösung mit weiteren 1250 g Methanol verdünnt. Die Lösung wurde auf 30°C aufgeheizt und mit methanolischer NaOH versetzt (13.8 g NaOH 46 %-ig in Wasser gelöst in 113 g Methanol).
Die Lösung wurde zunehmend trüber. Während der Gelphase wurde der Rührer auf höhere Drehzahl gestellt, um das Gel zu zerkleinern. Nach der Gelphase wurde noch 2 Stunden weiter reagieren gelassen, mit Essigsäure neutralisiert und der gebildete Feststoff abfiltriert, gewaschen und getrocknet. Es wurde ein vollverseifter Polyvinylalkohol erhalten mit einer Höppler-Viskosität von 6 mPas (4 %-ig in Wasser).

### Beispiel 1:

Mischung des höhermolekularen mit dem niedermolekularen silanhaltigen Polyvinylalkohols im Verhältnis von 1 : 2 (w/w)

### Beispiel 2:

Mischung des höhermolekularen mit dem niedermolekularen silanhaltigen Polyvinylalkohols im Verhältnis von 1 : 4 (w/w)

### Vergleichsbeispiel 1:

Handelsüblicher silanhaltiger Polyvinylalkohol mit einer Höppler-Viskosität von 25 mPas (4 %-ig in Wasser)

### Vergleichsbeispiel 2:

Höhermolekularer silanhaltiger Polyvinylalkohol mit einer Höppler-Viskosität von 28 mPas (4 %-ig in Wasser)

### Vergleichsbeispiel 3

Niedermolekularer silanhaltiger Polyvinylalkohol mit einer Höppler-Viskosität von 6 mPas (4 %-ig in Wasser)

### Anwendungstechnische Prüfung:

Die Polyvinylalkohole aus den Beispielen bzw. Vergleichsbeispielen wurden in folgender Rezeptur getestet:

### Rezeptur Streichmasse:

| | |
|---|---|
| Gefällte Kieselsäure | 100 Gew.-Teile |
| Polyvinylalkohol | 35 Gew.-Teile |
| Kationisches Dispergiermittel | 5 Gew.-Teile |
| Festgehalt der Streichmasse: | 20 - 35 Gew.-% |

Getestet wurde die Streichmasse auf Rohpapier: Geleimtes Papier ca 80 g/m² . Der Strichauftrag betrug 15 g/m²

### Scheuertest:

Ein 4.5 cm breiter und 19 cm langer bestrichener Papierstreifen wurde in einem Scheuerprüfer der Fa. Prüfbau (System Dr. Dürner) mit einem auf einen Stempel (500 g) aufgebrachten schwarzen Tonzeichenpapier mit 50 Hüben bearbeitet.
Das resultierende schwarze Papier wurde danach optisch beurteilt, wobei die Note 1 das Optimum darstellt.

### Weißgrad:

Der Weißgrad wurde mittels Remissionsmessung mit einem Filter R 457 bestimmt und optisch beurteilt, wobei die Note 1 das Optimum darstellt.

**Tabelle 1:**

| Strichanalyse | Bsp. 1 | Bsp. 2 | Vbsp. 1 | Vbsp. 2 | Vbsp. 3 |
|---|---|---|---|---|---|
| Scheuertest | 1 | 1 | 1.5 | 1 | 4 |
| Weißgrad optisch | 1 | 1 | 1 | 1 | 5 |
| Weißgrad R457 | 5.0 | 5.1 | 5.1 | 5.1 | 15.3 |

### Viskosität:

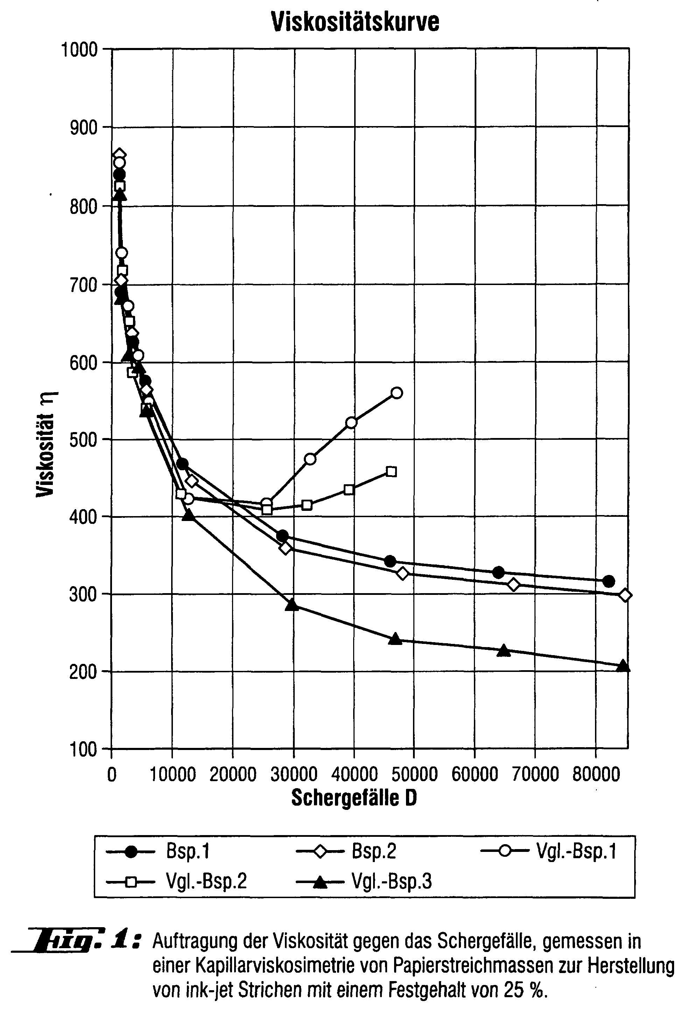

Die Hochdruckkapillarviskosität wurde mit einem Hochdruck-Kapillar-Viskosimeter HV 6 der Firma Anton Paar (Österreich) bestimmt (Figur 1).
Man erkennt, dass Papierstreichmassen mit einem Festgehalt von 25 %, welche nur hochmolekularen, silanhaltige, Polyvinylakohol (PVAL) enthalten (Vbsp. 1 und 2), dilatantes Verhalten zeigen. Dies führt zu einer deutlich geringeren "runability" der Streichmaschinen und ist somit nicht akzeptabel. Streichmassen mit den erfindungsgemäßen Mischungen oder mit dem niedermolekularen, modifizierten PVAL haben das benötigte strukturviskoses Verhalten.
Papierstriche, hergestellt mit nur dem niedermolekularen PVAL (Vbsp. 3) zeigen jedoch eine nicht ausreichende Abriebfestigkeit und Bindekraft.

## Patentansprüche

1. Silan-modifizierte Polyvinylalkohol-Mischungen mit
a) einem niedermolekularen, Silan-haltigen Polyvinylalkohol mit einer Höppler-Viskosität (nach DIN 53015 als 4 Gew.-%-ige wässrige Lösung) von 1 bis 25 mPas, und
b) einem höhermolekularen, Silan-haltigen Polyvinylalkohol mit einer Höppler-Viskosität (nach DIN 53015 als 4 Gew.-%ige wässrige Lösung) von 10 bis 50 mPas,
wobei
der Silan-haltige Polyvinylalkohol a) eine geringere Höppler-Viskosität aufweist, als der Silan-haltige Polyvinylalkohol b).

2. Silan-modifizierte Polyvinylalkohol-Mischungen nach Anspruch 1 mit einem Gewichtsverhältnis von niedermolekularem, Silan-haltigem Polyvinylalkohol a) zu dem höhermolekularen, Silan-haltigen Polyvinylalkohol b) von 30 : 80 bis 90 : 10.

3. Silan-modifizierte Polyvinylalkohol-Mischungen nach Anspruch 1 oder 2, wobei die Silaneinheiten durch Copolymerisation erhalten werden, mit Silan-haltigen, ethylenisch ungesättigten Monomeren aus der Gruppe umfassend ethylenisch ungesättigte Siliciumverbindungen der allgemeinen Formel R²SiR³₀₋₂(OR⁴)₁₋₃, wobei R² die Bedeutung CH₂=CR⁵-(CH₂)₀₋₃ oder CH₂=CR⁵CO₂(CH₂)₁₋₃ hat, R³ die Bedeutung C₁- bis C₃-Alkylrest, C₁- bis C₃-Alkoxyrest oder Halogen hat, R⁴ ein unverzweigter oder verzweigter, gegebenenfalls substituierter Alkylrest mit 1 bis 12 C-Atomen ist oder ein Acylrest mit 2 bis 12 C-Atomen ist, wobei R⁴ gegebenenfalls durch eine Ethergruppe unterbrochen sein kann, und R⁵ für H oder CH₃ steht, oder
Silan-Gruppen enthaltene (Meth)acrylamide, der allgemeinen Formel CH₂= CR⁶-CO-NR⁷-R⁸-SiR⁹ₘ-(R¹⁰)₃₋ₘ , wobei
m = 0 bis 2, R⁶ entweder H oder eine Methyl-Gruppe ist, R⁷ H oder eine Alkyl-Gruppe mit 1 bis 5 C-Atomen ist, R⁸ eine Alkylen-Gruppe mit 1 bis 5 C-Atomen oder eine bivalente organische Gruppe in welcher die Kohlenstoffkette durch ein O- oder N-Atom unterbrochen wird, ist, R⁹ eine Alkyl-Gruppe mit 1 bis 5 C-Atomen ist, R¹⁰ eine Alkoxy-Gruppe mit 1 bis 40 C-Atomen ist, welche mit weiteren Heterocyclen substituiert sein können.

4. Verfahren zur Herstellung der Silan-haltigen Polyvinylalkohol-Mischungen nach Anspruch 1 bis 3 mittels Substanzpolymerisation, Suspensionspolymerisation oder durch Polymerisation in organischen Lösungsmitteln, Verseifung der damit erhaltenen Polymerisate, und Vermischen der wässrigen Lösungen der Komponente (a) und (b).

5. Verwendung der Silan-haltigen Polyvinylalkohol-Mischungen nach Anspruch 1 bis 3 als Bindemittel zur Formulierung von Papierstreichmassen.

## Claims

1. Silane-modified polyvinyl alcohol mixtures comprising
a) a low molecular weight, silane-containing polyvinyl alcohol having a Höppler viscosity (according to DIN 53015 as 4% strength by weight aqueous solution) of from 1 to 25 mPas
and
b) a higher molecular weight, silane-containing polyvinyl alcohol having a Höppler viscosity (according to DIN 53015 as 4% strength by weight aqueous solution) of from 10 to 50 mPas,
the silane-containing polyvinyl alcohol a) having a lower Höppler viscosity than the silane-containing polyvinyl alcohol b).

2. Silane-modified polyvinyl alcohol mixtures according to Claim 1, having a weight ratio of low molecular weight, silane-containing polyvinyl alcohol a) to the higher molecular weight, silane-containing polyvinyl alcohol b) of from 30 : 80 to 90 : 10.

3. Silane-modified polyvinyl alcohol mixtures according to Claim 1 or 2, the silane units being obtained by copolymerization, comprising silane-containing, ethylenically unsaturated monomers from the group consisting of ethylenically unsaturated silicon compounds of the general formula R²SiR³₀₋₂(OR⁴)₁₋₃, in which R² has the meaning CH₂=CR⁵-(CH₂)₀₋₃ or CH₂=CR⁵CO₂(CH₂)₁₋₃, R³ has the meaning C₁- to C₃-alkyl radical, C₁- to C₃-alkoxy radical or halogen, R⁴ is a straight-chain or branched, unsubstituted or substituted alkyl radical having 1 to 12 C atoms or an acyl radical having 2 to 12 C atoms, it being possible for R⁴ to be interrupted by an ether group, and R⁵ is H or CH₃, or
(meth)acrylamides containing silane groups and of the general formula CH₂=CR⁶-CO-NR⁷-R⁸-SiR⁹ₘ-(R¹⁰)₃₋ₘ, in which m = 0 to 2, R⁶ is either H or a methyl group, R⁷ is H or an alkyl group having 1 to 5 C atoms, R⁸ is an alkylene group having 1 to 5 C atoms or a bivalent organic group in which the carbon chain is interrupted by an O or N atom, R⁹ is an alkyl group having 1 to 5 C atoms and R¹⁰ is an alkoxy group which has 1 to 40 C atoms and may be substituted by further heterocycles.

4. Process for the preparation of the silane-containing polyvinyl alcohol mixtures according to any of Claims 1 to 3 by means of mass polymerization, suspension polymerization or polymerization in organic solvents, hydrolysis of the polymers thus obtained, and mixing of the aqueous solutions of the components (a) and (b).

5. Use of the silane-containing polyvinyl alcohol mixtures according to any of Claims 1 to 3 as binders for formulating paper coating slips.

## Revendications

1. Mélanges d'alcools polyvinyliques silane-modifiés comprenant
a) un alcool polyvinylique à fonction silane, à faible poids moléculaire, présentant une viscosité Höppler (conformément à DIN 53015 sous forme d'une solution aqueuse à 4 % en poids) de 1 à 25 mPas
et
b) un alcool polyvinylique à fonction silane, à poids moléculaire élevé, présentant une viscosité Höppler (conformément à DIN 53015 sous forme d'une solution aqueuse à 4 % en poids) de 10 à 50 mPas,
l'alcool polyvinylique à fonction silane a) présentant une viscosité Höppler plus faible que l'alcool polyvinylique à fonction silane b).

2. Mélanges d'alcools polyvinyliques silane-modifiés selon la revendication 1, présentant un rapport pondéral entre l'alcool polyvinylique à fonction silane, à faible poids moléculaire a) et l'alcool polyvinylique à fonction silane, à poids moléculaire élevé b) de 30 : 80 à 90 : 10.

3. Mélanges d'alcools polyvinyliques silane-modifiés selon la revendication 1 ou 2, les motifs silane étant obtenus par copolymérisation, comprenant des monomères éthyléniquement insaturés à fonction silane parmi le groupe constitué de composés siliciés éthyléniquement insaturés de formule générale R²SiR³₀₋₂(OR⁴)₁₋₃, dans laquelle R² représente CH₂=CR⁵-(CH₂)₀₋₃ ou CH₂=CR⁵CO₂(CH₂)₁₋₃, R³ représente un radical alkyle en C₁ à C₃, un radical alcoxy en C₁ à C₃ ou un halogène, R⁴ représente un radical alkyle linéaire ou ramifié, éventuellement substitué, renfermant de 1 à 12 atomes de carbone, ou un radical acyle renfermant de 2 à 12 atomes de carbone, R⁴ pouvant éventuellement être interrompu par un groupe éther, et R⁵ représente H ou CH₃, ou des (méth)acrylamides renfermant des groupes silane, de formule générale CH₂= CR⁶-CO-NR⁷-R⁸-SiR⁹ₘ-(R¹⁰)₃₋ₘ , dans laquelle m = de 0 à 2, R⁶ représente soit H soit un groupe méthyle, R⁷ représente H ou un groupe alkyle renfermant de 1 à 5 atomes de carbone, R⁸ représente un groupe alkylène renfermant de 1 à 5 atomes de carbone ou un groupe organique bivalent dans lequel la chaîne carbonée est interrompue par un atome d'oxygène ou d'azote, R⁹ représente un groupe alkyle renfermant de 1 à 5 atomes de carbone et R¹⁰ représente un groupe alcoxy renfermant de 1 à 40 atomes de carbone, lequel peut être substitué par des hétérocycles supplémentaires.

4. Procédé de préparation des mélanges d'alcools polyvinyliques à fonction silane selon l'une quelconque des revendications 1 à 3 par polymérisation en masse, polymérisation en suspension ou polymérisation dans des solvants organiques, hydrolyse des polymères ainsi obtenus et mélangeage des solutions aqueuses des composants (a) et (b).

5. Utilisation des mélanges d'alcools polyvinyliques à fonction silane selon l'une quelconque des revendications 1 à 3 en tant que liants pour la formulation de compositions d'enduction pour papier.
